# EUROPEAN PATENT SPECIFICATION

(11) **EP 3 482 931 B1**
(45) Date of publication and mention of the grant of the patent: **12.01.2022**
(21) Application number: 17201220.5
(22) Date of filing: 10.11.2017
(51) Int. Cl.: B33Y 10/00, B33Y 30/00, B33Y 50/02, B29C 64/153, B29C 64/259, B29C 64/357, B29C 64/393, B29C 64/307, B29C 64/205, B29C 64/264, B22F 10/30, B22F 12/00

(54) **METHOD FOR OPERATING AT LEAST ONE APPARATUS FOR ADDITIVELY MANUFACTURING OF THREE-DIMENSIONAL OBJECTS**
VERFAHREN ZUM BETRIEB VON MINDESTENS EINER VORRICHTUNG ZUR GENERATIVEN FERTIGUNG VON DREIDIMENSIONALEN OBJEKTEN
PROCÉDÉ DE FONCTIONNEMENT D'AU MOINS UN APPAREIL DE FABRICATION ADDITIVE D'OBJETS TRIDIMENSIONNELS

(43) Date of publication of application: 15.05.2019
(60) Divisional application: 21212599.1
(73) Proprietor: CL Schutzrechtsverwaltungs GmbH, 96215 Lichtenfels (DE)
(72) Inventor: Zeidler, Stephan, 15834 Rangsdorf (DE); Kroher, Tanja, 96479 Weitramsdorf (DE)
(74) Representative: Hafner & Kohl PartmbB

(56) References cited:
- EP-A1- 3 228 441
- WO-A1-2016/165746
- WO-A1-2016/202404
- DE-U1-202009 000 825

## Description

The invention relates to a method for operating at least one apparatus for additively manufacturing of three-dimensional objects by means of successive layerwise selective irradiation and consolidation of layers of a build material which can be consolidated by means of an energy source, which apparatus comprises at least one build material container adapted to receive build material. Such apparatuses and methods for operating the same are generally known from prior art. Typically, a powdery build material is used that can be consolidated, for example upon irradiation with a corresponding energy source, e.g. a laser beam or an electron beam. Further, it is known from prior art that different properties of the build material may influence the manufacturing quality or different properties of the object to be manufactured, e.g. mechanical properties. EP3228441A1 discloses a quality control method of a stock of a base material for the additive manufacture of components comprising selecting a batch of a base material out of a plurality of indexed batches of the stock, wherein base material assigned to the same batch index is indicative to the quality of the respective base material.

Additionally, build material that has not been consolidated throughout a manufacturing process can be reused in another manufacturing process, in particular after post-processing the non-consolidated build material. The post-processing is usually performed via a suitable post-processing apparatus, e.g. a sieving unit separating (at least partially) consolidated build material from non-consolidated build material.

It is an object to provide an improved method for operating at least one apparatus for additively manufacturing of three-dimensional objects, in particular wherein the quality of the manufactured object is improved.

The object is inventively achieved by a method according to claim 1. Advantageous embodiments of the invention are subject to the dependent claims. The apparatus the method described herein is performed on, is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that the number of build processes at least one part of the build material received in the at least one build material container has been used in is determined. Thus, the method suggests to determine how often the respective amount or volume of build material that is received in the at least one build material container has already been used in manufacturing processes. In other words, the method allows for a determination of the manufacturing process cycles the build material went through.

Therefore, by way of the invention it is possible to determine whether the build material has already been used in a manufacturing process and in how many manufacturing processes the build material received in the build material container has already been used or whether the build material has not been used in a manufacturing process ("fresh build material").

This allows for the generation of information regarding the quality of the build material, as the number of manufacturing process cycles the build material has been used in may be disadvantageous for the quality of the build material. For example, if the build material received in the build material container has already been used in a manufacturing process, non-consolidated build material may be contained in the volume of build material. Further, the temperature differences that occur during the manufacturing process may also have negative effects on the build material, e.g in the event of using synthetic materials a partial decomposition may occur. Also, a segregation of a defined build material blend, e.g. regarding a particle size distribution, may progress with the number of manufacturing processes.

Additionally, post-processing steps performed on the non-consolidated build material, i.e. the reused build material, may also have negative effects on the build material. For example, the particle size distribution of the build material may be changed during post-processing, as in typical sieving units different mesh sizes allow to separate different particle sizes, in particular consolidated conglomerates of powdery particles, from the build material. Thus, the particle size distribution of "fresh build material" may differ from the particle size distribution of build material that has already been used in a manufacturing process and/or that has been post-processed.

Further, the number of manufacturing process cycles, i.e. the number of times the build material has been used in a manufacturing process, may further alter the particle size distribution. Hence, build material that has been used in two manufacturing processes may have a different particle size distribution as build material that has only been used in one manufacturing process and so on. Of course, the particle size distribution is only one example of a parameter that may be changed by using the build material in a manufacturing process. Self-evidently, other parameters affecting the process quality, in particular the quality of the build material, can also be taken into calculation.

According to a first embodiment of the method, the number of sieving processes performed on at least one part of the build material received in the at least one build material container may be determined. Particularly, the first embodiment allows to determine whether at least one sieving process has been performed on the at least one part of build material received in the build material container. Consequently, the number of sieving processes may be determined as well. A sieving process can, for example, be regarded as post-processing step, as described before. Hence, build material that has not been consolidated in a manufacturing process can be delivered into a post-processing apparatus, for example a sieving unit adapted to sieve the build material, i.e. separate partially consolidated conglomerates of build material particles from non-consolidated build material particles. Such sieving processes have also other effects on the build material, for example the particle size distribution of the build material may be changed, e.g. dependent on the mesh size used to sieve the build material.

Generally, build material that has not been used in a manufacturing process, in particular has not been post-processed via a sieving unit, may comprise a broader particle size distribution than sieved build material, as more build material particles of different particles sizes are present in the volume of build material. Typically, in sieving units meshes with predefined grid sizes or mesh sizes are used, to separate particles, in particular conglomerates of partially consolidated build material particles, from the volume of build material. Thus, build material particles with sizes larger than the grid size will be separated from the volume of build material.

The described embodiment further allows verifying whether a sieving process has been performed on the build material that has already been used in the manufacturing process. Thereby, it can be avoided that build material that has been used in a manufacturing process is not properly post-processed, e.g. not sieved. Therefore, avoiding the use of build material containing partially consolidated build material particles is possible.

The term "determination" of the number of manufacturing processes build material has been used in and/or the number of sieving processes performed on the build material in the scope of this specification does not necessarily involve an analysis of the build material. Instead, the respective number of processes can also be "counted" in that for the corresponding build material the number of processes is stored or noted, wherein preferably the number of processes is updated, if another process is performed on the build material or the build material is used in another manufacturing process, respectively.

The method is further improved in that dependent on the number of build processes (manufacturing processes) and/or the number of sieving process performed, at least one defined amount of build material with a defined number of build processes and/or sieving processes, in particular fresh build material, is added to the build material received in the build material container. The term "fresh build material" preferably refers to build material that has not been used in a manufacturing process. Fresh build material preferably comprises defined properties such as a defined particle size distribution.

Thus, a defined amount of build material is added to the build material received in the build material container, for example to compensate the effects on the build material received in the build material container caused by the number of manufacturing processes the build material has been used in and/or the number of sieving processes performed on the build material. Dependent on the number of build processes or manufacturing processes and/or a number of sieving processes performed, the amount of the build material that is added to the build material received in the build material container can be varied, e.g. more "fresh build material" is added the higher the number of build processes and/or number of sieving processes performed.

By adding build material with a defined number of build processes and/or sieving processes to the build material received in the build material container a mixture of build materials with different numbers of build processes and/or sieving processes is possible. Thus, it may be useful to have the determination unit or a separate determination unit adapted to determine a blending degree, i.e. whether or to what degree the single build materials are blended.

It is also possible that a ratio of build material with different numbers of build processes and/or sieving processes the build material received in the build material container is comprised of is determined. Therefore, the corresponding determination unit is adapted to determine the ratio of build materials the volume of build material received in the build material container is composed of. In other words, the single amounts of the build materials with different numbers of build processes and/or sieving processes that are received in the build material container can be determined. For example, it is made feasible that a ratio of fresh build material and a ratio of build material with one build process and/or one sieving process and so on can be determined.

According to another embodiment of the method, the build material received in the build material container can be reused in different processing steps dependent on the number of build processes and/or a number of sieving processes. Thus, for different processing steps or for different objects to be manufactured in the manufacturing process different requirements can be defined, in particular relating to the build material quality or the object quality. Such a "quality parameter" can be defined for different customers and/or different parts to be manufactured and/or different quality levels. The different quality levels can, for example, be defined regarding the intended use of the object, in particular it can be differentiated between high requirements, such as in medical or aerospace or similar applications requiring well met properties, e.g. mechanical properties of the object. Further, it is possible to define medium requirements and/or low requirements, such as models, toys or art in which various properties of the object, for example mechanical properties, are of minor importance.

At least one parameter relating to the number of build processes and/or the number of sieving processes of the build material received in the at least one build material container is determined, in particular the color and/or the grain size (particle size) and/or the grain size distribution (particle size distribution) and/or the mesh size of the at least one mesh used in a sieving process may be determined. By determining the above-mentioned parameter(s), conclusions can be made relating to the number of build processes and/or the number of sieving processes of the received build material and/or to the quality of the build material.

As, in particular the grain size and/or the grain size distribution varies with the number of build processes and/or the number of sieving processes performed, upon the determination of the grain size and/or the grain size distribution in the volume of build material received in the build material container, a statement about how often the build material has already been used and the current quality of the build material can be made. The described parameters can therefore, also be used to determine whether it is necessary to add build material with a defined number of build processes and/or a defined number of sieving processes, in particular fresh build material, to the build material received in the build material container.

According to another embodiment of the method, an information storage is suggested. In particular, the number of build processes and/or the number of sieving processes and/or the at least one parameter, as described above, can be stored via the information storage. The information storage may be connected with the build material container, wherein the information stored in or connected with the information storage can be read from the information storage directly or indirectly. For example, the information can be read directly from the information storage, e.g. with the information storage being built as a data storage, preferably a hard drive. The information stored in or linked with the information storage can also be read indirectly, in particular via a barcode and/or a QR-code and/or via RFID and/or NFC. The information storage may be attached to the build material container.

Of course, information can also be stored directly in a barcode and/or a QR-code or a RFID-tag or a NFC-tag. Thus, it is possible to store information, in particular the number of build processes and/or the number of sieving processes and/or the at least one parameter in the information storage. Besides, it is also possible that the respective information storage is used to link or identify the respective build material container the information storage is attached to with a data storage separate to the build material container in which the number of build processes and/or the number of sieving processes is stored. For example, an information storage attached to a build material container, for example as a QR-code, links the build material container with the corresponding entry in a data storage in which the number of processes the build material received in the corresponding build material container has already been used in and/or the number of sieving process is performed on the build material received in the corresponding build material container are stored. Of course, an arbitrary combination of the described ways to store and/or link and/or read information from the information storage or a data storage linked with the information storage is possible.

Another preferred embodiment of the method suggests that the number of build processes and/or the number of sieving processes is updated after a corresponding process is completed. After build material is used in a build process and/or after a sieving processes performed on the build material, the determined number of build processes and/or the number of sieving processes is updated, for example amended in the information storage attached with the corresponding build material container (or data storage).

Of course, it is also possible to provide specific build material containers that receive a build material with a defined number of build processes and/or a defined number of sieving processes performed. For example, a build material container may be provided in which solely build material that has already been used in one build process and/or which has already been sieved once is received. Analogously, another build material container may be provided in which build material that has already been used twice in a build process and/or which has already been sieved twice can be received. Further, thresholds may be defined up to which build material is received in an assigned build material container, e.g. a build material container is provided that receives build material that has been used in a defined number of build processes and/or build material that has been sieved a defined number of times, e.g. 3 times, wherein another build material container may be provided that receives build material that has been used in 4 to 6 build processes and/or which has been sieved 4 to 6 times. Besides, the invention relates to a determination unit for an apparatus for additively manufacturing of three-dimensional objects by means of successive layerwise selective irradiation and consolidation of layers of a build material which can be consolidated by means of an energy source according to claim 7.

Further, the invention relates to an apparatus for additively manufacturing of three-dimensional objects by means of successive layerwise selective irradiation and consolidation of layers of a build material which can be consolidated by means of an energy source, which apparatus comprises at least one build material container adapted to receive build material, wherein the apparatus comprises at least one inventive determination unit.

The respective build material container may, in particular, be built as or be comprised in a build module, e.g. a build chamber of a build module, and/or an overflow module, e.g. an overflow chamber of an overflow module, or the build material container may be connected with the build module or the overflow module. Further, the build material container may also be connectable with a corresponding post-processing apparatus, such as a handling station and/or a sieving station.

Of course, all features, details and advantages described with respect to the inventive method are fully transferable to the inventive determination unit and the inventive apparatus.

Exemplary embodiments of the invention are described with reference to the Fig. The Fig. are schematic diagrams, wherein
- Fig. 1: shows an inventive apparatus Exemplary embodiments;
- Fig. 2: shows an inventive handling station;
- Fig. 3: shows an inventive sieving station;
- Fig. 4: shows an inventive blending unit;
- Fig. 5: shows an inventive dose station;
- Fig. 6: shows an inventive determination unit; and
- Fig. 7: shows a flow diagram of the inventive method.

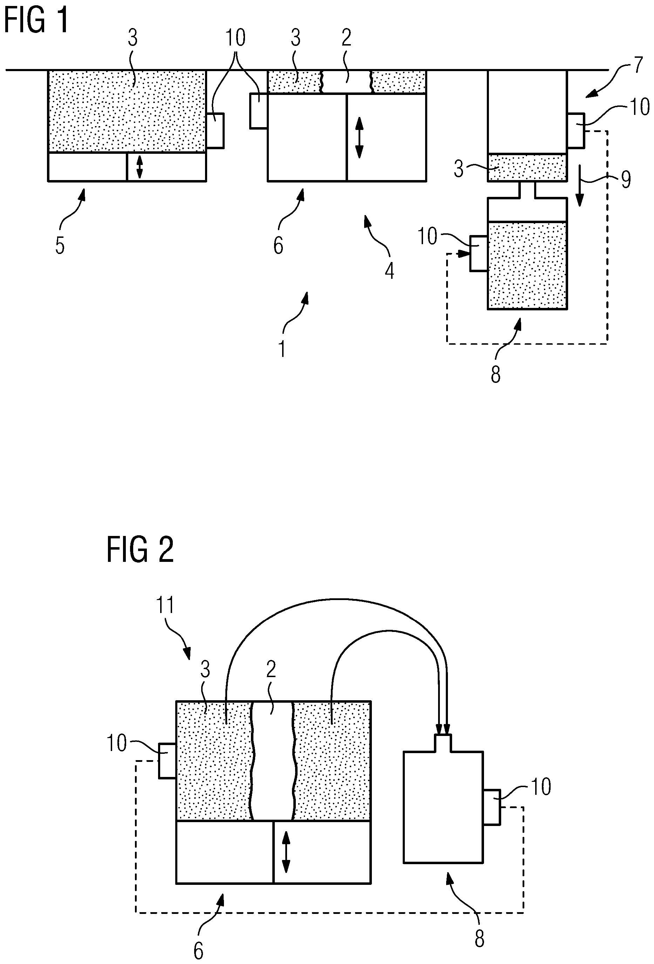

Fig. 1 shows an apparatus 1 for additively manufacturing of three-dimensional objects 2 by means of successive layerwise selective irradiation and consolidation of layers of a build material 3 which can be consolidated by means of an energy source, e.g. a laser beam. The apparatus comprises multiple build material containers 4 in which build material 3 is received or can be received. The apparatus 1 for example comprises a dose module 5, a build module 6 and an overflow module 7 which can all be regarded as build material containers 4 in the scope of this application.

Further, the apparatus 1 comprises a build material container 8 that is separably connectable with the modules 5 - 7, whereby the build material container 8 is connected to the overflow module 7 in the situation depicted in Fig. 1. Fig. 1 further shows that the build material containers 4, in particular the dose module 5, the build module 6, the overflow module 7 and the build material container 8 are equipped with information storages 10. Each information storage 10 is used to store the number of build processes the build material 3 received in the respective build material container 4 and the number of sieving processes performed on the build material 3 received in the respective build material container 4.

For example, the information storage 10 is built as readable information storage 10 attached to the outside of the respective build material container 4. In other words, the information storage 10 can be read by a corresponding device, e.g. the information storage 10 can be built as QR-code attached to an outer surface of the respective build material container 4 and read with a corresponding QR-code scanner (not shown). Thereby, the QR-code links the respective build material container 4 or the build material 3 received in the build material container 4 with the corresponding information stored in a data storage (not shown). Thus, if the information storage 10 attached to the build material container 4 is read, a link is established to the corresponding entry in the data storage. Of course, it is also possible to have the information directly stored in the information storage 10, for example by building the information storage 10 as data storage, e.g. as hard drive, directly.

As indicated with an arrow 9, the build material 3 received in the overflow module 7 can be filled from the overflow module 7 into the detachable build material container 8. The information relating to the build material 3 filled from the overflow module 7 into the build material container 8 is transferred from the information storage 10 of the overflow module 7 to the information storage 10 of the build material container 8. For example, if the build material 3 used in the dose module 5 is "fresh build material" that has not been used in a manufacturing process and has not been sieved, the corresponding information is transferred from the information storage 10 of the overflow module 7 (which may have received the information from the information storage 10 of the dose module 5) to the information storage 10 of the build material container 8. Thereby, the information is updated, as the build material 3 that is filled from the overflow module 7 into the build material container 8 has been used in the manufacturing process depicted in Fig. 1. Thus, the corresponding information is updated and stored (or linked) to the information storage 10 of the build material container 8. For the sake of simplicity, the reference sign 8 is used for detachable build material containers, wherein, of course, different build material containers or the same build material container can be used.

Fig. 2 shows a handling station 11 in which the non-consolidated build material 3 surrounding the object 2 is removed. The build module 6 is depicted after the build process has been finished and the object 2 has been manufactured in the corresponding build chamber of the build module 6. The non-consolidated build material 3 surrounding the object 2 is removed from the build chamber, e.g. sucked from the build chamber and filled into a build material container 8. Further, the corresponding information is received by the information storage 10 of the build material container 8 from the information storage 10 of the build module 6 (as depicted by a dashed arrow). Thus, the information, that the non-consolidated build material 3 has already been used in the manufacturing process is depicted in Fig. 1 (and maybe of the manufacturing processes and sieving processes before) is transferred to the information storage 10 of the build material container 8 (or the data storage linked with the information storage 10).

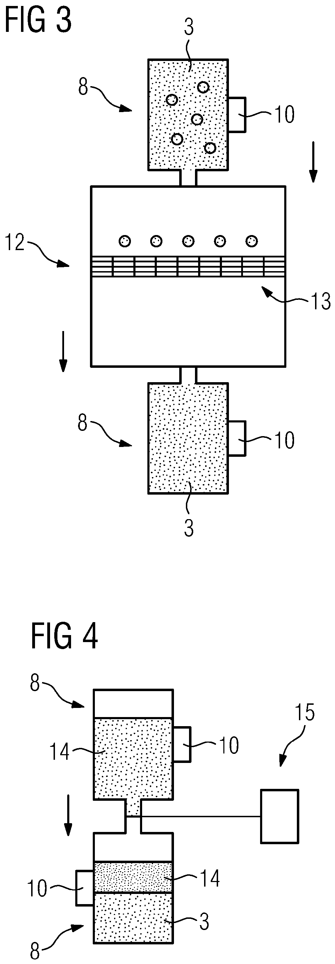

Fig. 3 shows a build material container 8 containing build material 3, for example the build material container 8 depicted in Fig. 1 or the build material container 8 depicted in Fig. 2, wherein both build material containers 8 contain build material 3 that has already been used in one or more manufacturing processes. The build material container 8 is attached to a sieving unit 12 comprising at least one mesh unit 13 with a defined mesh size. The mesh unit 13 can also be referred to as grid unit and the mesh size can also be referred to as grid size.

By conveying the build material 3 received in the build material container 8 through the mesh unit 13, build material 3 with the particle size larger than the mesh size is separated from the build material 3. In particular, at least partially consolidated build material 3, e.g. conglomerates of build material particles are separated from the build material 3. Thus, a build material container 8 or the same build material container 8 can be connected to the corresponding portion of the sieving unit 12 and therefore, receive the build material 3 that has been sieved by the sieving unit 12. Thus, the information storage 10 of the build material container 8 that receives the build material 3 sieved via the sieving unit 12 is updated in that the sieving process is added to the number of sieving processes performed on the build material 3 contained in the build material container 8.

As depicted in Fig. 4, build material 14 with a defined number of manufacturing processes (build processes) and/or a defined number of sieving processes performed on the build material 14, e.g. fresh build material, can be added to the build material 3 received in a build material container 8. Therefore, a blending unit 15 is provided that adds a specific amount or volume of build material 14 to the build material 3 received in the build material container 8. The number of build processes and/or sieving processes performed on the build material 14 are stored in the information storage 10 attached to the corresponding build material container 8 of the blending unit 15 or the respective numbers are updated. Further, the blending unit 15 is adapted to blend the build material 3, 14 received in the build material container 8 in that a homogeneous blend of build materials 3, 14 is achieved.

Accordingly, the information storage 10 attached to the build material container 8 that received the specific amount of build material 14 is updated in that the ratio of build material 3 to build material 14 after adding the build material 14 is stored in the information storage 10.

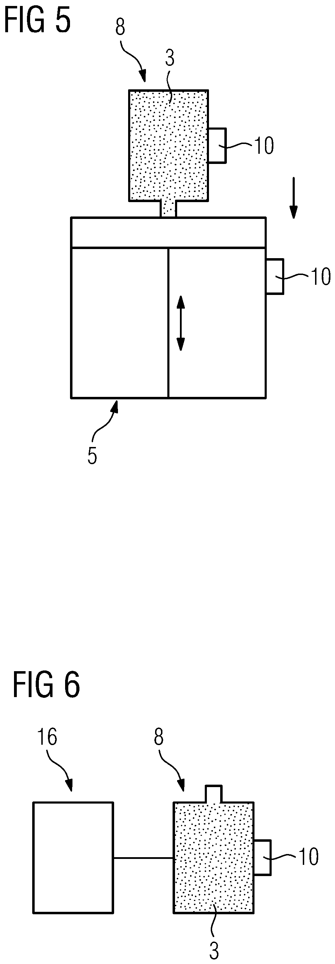

Fig. 5 shows a dose module 5 or the dose module 5 as depicted in Fig. 1 in an empty state. As depicted, build material 3 received in the build material container 8 can be added to the dose module 5, in particular in the corresponding dose chamber of the dose module 5. For example, the build material container 8 depicted in Fig. 5 is the build material container 8 that received the sieved build material 3 as depicted in Fig. 3, wherein build material 14 (e.g. "fresh build material") was added via the blending unit 15, as depicted in Fig. 4.

Thus, the information storage 10 attached to the build material container 8 contains the corresponding information regarding the process history of the build material 3, 14 received in the build material container 8. Therefore, it can be evaluated, whether the resulting blend of build material 3, 14 is suitable for the manufacturing process the dose module 5 provides the build material 3 for. Consequently, the information is transferred to the information storage 10 attached to the dose module 5.

Fig. 6 shows a determination unit 16 that is used to determine different parameters relating to the number of manufacturing processes the build material 3 received in the build material container 8 has been used in and the number of sieving processes performed on the build material 3 received in the build material container 8. Respective parameters the determination unit 16 determines are, for example, the color of the build material 3 and the grain size of the build material 3 as well as the grain size distribution of the build material 3 received in the build material container 8. The determination unit 16 also "counts" the number of manufacturing processes the corresponding build material 3 received in the build material container 8 is used in and the number of sieving processes performed on the build material 3. The determination unit 16 further updates the information stored in the information storages 10. The determination unit 16 can be considered as part of the apparatus 1 as depicted in Fig. 1. Of course, the apparatus 1, as well as the determination unit 16 are adapted to perform the inventive method.

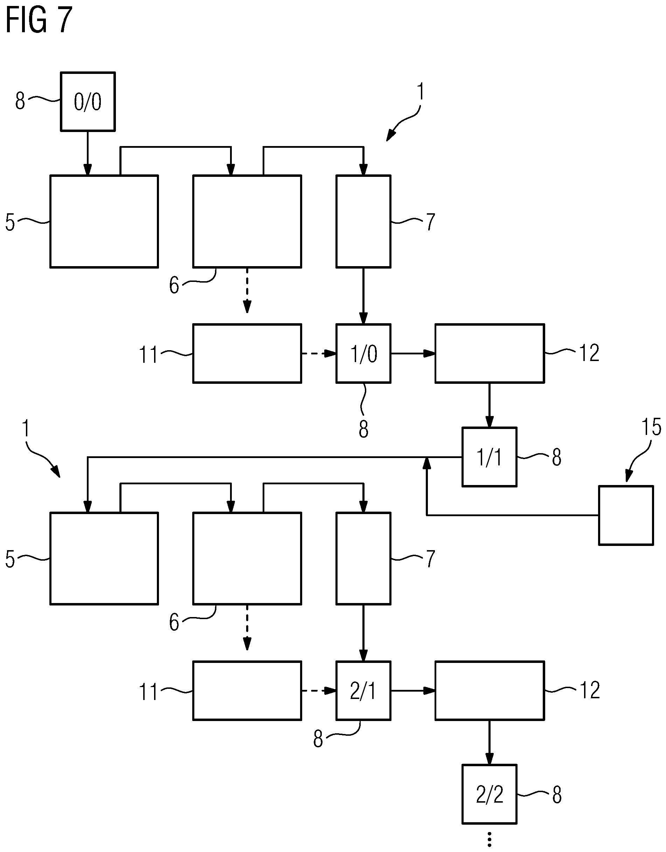

Fig. 7 shows a flow diagram of a method for operating an apparatus 1 for additively manufacturing three-dimensional objects to, for example as depicted in Fig. 1. In a first process step build material 3 is filled from a build material container 8 into a dose chamber of a dose module 5. The corresponding build material container 8 is referenced with "0/0", indicating that the build material 3 received in the build material container 8 is "fresh build material" that has been used in 0 manufacturing processes and wherein 0 sieving processes have been performed on the build material 3. In other words, the reference indicates the information stored in the information storage 10. The corresponding number of manufacturing processes and sieving processes performed on the build material 3 are transferred via the determination unit 16 from the information storage 10 attached to the build material container 8 to the information storage 10 assigned to the dose module 5.

The build material 3 received in the dose module 5 is conveyed into a build chamber of a build module 6, wherein surplus build material 3 is conveyed into an overflow chamber of an overflow module 7. Again, the build material 3 can be refilled into the build material container 8 that can be connected to the overflow module 7. Thus, the build material container 8 is referenced with "1/0", indicating that the build material 3 has been used in one manufacturing process and that no sieving process has been performed on the build material 3. By doing so it can be avoided that the build material 3 is reused in a manufacturing process without proper post-processing.

The build material 3 that has not been consolidated throughout the manufacturing process and is received in the build chamber of the build module 6 can also be added to the build material 3 contained in the build material container 8, wherein the non-consolidated build material 3 can be removed from the build chamber of the build material 6 in a handling station 11.

Subsequently, the build material container 8 receiving the build material 3 can be connected with a sieving unit 12 in which the build material 3 can be sieved, as described before with respect to Fig. 3. Accordingly, the build material container 8 is referenced with "1/1", indicating that the build material 3 received in the build material container 8 has been used in one manufacturing process and that one sieving process has been performed on the build material 3.

In the next process step build material 14 with a defined number of manufacturing processes and sieving processes can optionally be blended with the build material 3 received in the build material container 8 via a blending unit 15, as described before with respect to Fig. 4.

The build material 3 received in the build material container 8 can subsequently be reused in that the build material 3 can be filled from the build material container 8 into the dose module 5, as described before. An evaluation can be made whether the build material 3 indicated with "1/1" fulfills the requirements defined for the process the dose module 5 provides build material 3 for.

After another manufacturing process, the build material container 8 is referenced with "2/1", indicating that the build material 3 has been used in two manufacturing processes and that only one sieving process has been performed the build material 3 (in the case that no fresh build material has been blended via the blending unit 15).

Further, the build material 3 received in the build material container 8 can again be sieved in the sieving unit 12, wherein afterwards the build material container 8 is referenced with "2/2" indicating that the build material 3 received in the build material container 8 has been used in two manufacturing processes and that two sieving processes have been performed on the build material 3. The corresponding method can be continued accordingly.

Self-evidently, the described method can be performed on the determination unit 16 and the apparatus 1 comprising a corresponding determination unit 16.

## Claims

1. Method for operating at least one apparatus (1) for additively manufacturing of three-dimensional objects (2) by means of successive layerwise selective irradiation and consolidation of layers of a build material (3, 14) which can be consolidated by means of an energy source, which apparatus (1) comprises at least one build material container (4, 8) adapted to receive build material (3, 14), wherein the number of build processes at least one part of the build material (3, 14) received in the at least one build material container (4, 8) has been used in is determined by counting the number of build processes and/or determining at least one parameter relating to the number of build processes, wherein dependent on the number of build processes and/or the number of sieving processes performed, at least one defined amount of build material (3, 14) with a defined number of build processes and/or sieving processes, in particular fresh build material (3, 14), is added to the build material (3, 14) received in the build material container (4, 8) and dependent on the number of build processes and/or the number of sieving processes the build material (3, 14) is reused in different processing steps.

2. Method according to claim 1, wherein the number of sieving processes performed on at least one part of the build material (3, 14) received in the at least one build material container (4, 8) is determined.

3. Method according to claim 1 or 2, wherein a ratio of build material (3, 14) with different numbers of build processes and/or sieving processes the build material (3, 14) received in the build material container (4, 8) is comprised of is determined.

4. Method according to one of the preceding claims, wherein at least one parameter relating to the number of build processes and/or the number of sieving processes of the build material (3, 14) received in the at least one build material container (4, 8) is determined, in particular the color and/or the grain size and/or the grain size distribution and/or the mesh size of at least one mesh used in the sieving process.

5. Method according to one of the preceding claims, wherein the number of build processes and/or the number of sieving processes and/or the at least one parameter is stored via an information storage (10) connected with the build material container (4, 8), wherein the information stored in or connected with the information storage (10) can be directly, in particular via a data storage, preferably a hard drive, or indirectly, in particular via a barcode and/or a QR-code and/or RFID and/or NFC attached to the build material container (4, 8), read from the information storage (10).

6. Method according to one of the preceding claims, wherein the number of build processes and/or the number of sieving processes is updated after a corresponding process is completed.

7. Determination unit (16) for an apparatus (1) for additively manufacturing of three-dimensional objects (2) by means of successive layerwise selective irradiation and consolidation of layers of a build material (3, 14) which can be consolidated by means of an energy source, which apparatus comprises at least one build material container (4, 8) adapted to receive build material (3, 14), wherein the determination unit (16) is adapted to determine the number of build processes at least one part of the build material (3, 14) received in the at least one build material container (4, 8) has been used in and/or the number of sieving processes performed on at least one part of the build material (3, 14) received in the at least one build material container (4, 8) by counting the number of build processes and/or determining at least one parameter relating to the number of build processes, wherein the determination unit (16) is adapted to determine at least one defined amount of build material (3, 14) with a defined number of build processes and/or sieving processes, in particular fresh build material (3, 14), that is to be added to the build material (3, 14) received in the build material container (4, 8) dependent on the number of build processes and/or the number of sieving processes performed, and to determine different processing steps the build material (3, 14) is reused in dependent on the number of build processes and/or the number of sieving processes.

8. Determination unit according to claim 7, wherein the determination unit (16) is adapted to perform the method according to one of the claims 1 to 6.

9. Apparatus (1) for additively manufacturing of three-dimensional objects (2) by means of successive layerwise selective irradiation and consolidation of layers of a build material (3, 14) which can be consolidated by means of an energy source, which apparatus comprises at least one build material container (4, 8) adapted to receive build material (3, 14) and at least one determination unit (16) according to claim 7 or 8.

10. Apparatus according to claim 9, wherein at least one build material container (4, 8) is built as or arranged in a dose module (5) and/or a build module (6) and/or an overflow module (7) and/or a handling station (11) and/or a sieving unit (12) and/or a blending unit (15).

## Patentansprüche

1. Verfahren zum Betreiben mindestens einer Vorrichtung (1) zur additiven Herstellung von dreidimensionalen Objekten (2) mittels sukzessiver schichtweiser selektiver Bestrahlung und Verfestigung von Schichten eines mittels einer Energiequelle verfestigbaren Baumaterials (3, 14), welche Vorrichtung (1) mindestens einen zur Aufnahme von Baumaterial (3, 14) geeigneten Baumaterialbehälter (4, 8) aufweist, wobei die Anzahl der Bauprozesse, bei denen mindestens ein Teil des in dem mindestens einen Baumaterialbehälter (4, 8) aufgenommenen Baumaterials (3, 14) verwendet worden ist, durch Zählen der Anzahl der Bauprozesse und/oder Ermitteln mindestens eines auf die Anzahl der Bauprozesse bezogenen Parameters bestimmt wird, wobei in Abhängigkeit von der Anzahl der Bauprozesse und/oder der Anzahl der durchgeführten Siebvorgänge mindestens eine definierte Menge an Baumaterial (3, 14) mit einer definierten Anzahl von Bauprozessen verwendet wird, 14) mit einer definierten Anzahl von Bauprozessen und/oder Siebvorgängen, insbesondere frisches Baumaterial (3, 14), zu dem in dem Baumaterialbehälter (4, 8) aufgenommenen Baumaterial (3, 14) zugegeben wird und in Abhängigkeit von der Anzahl der Bauprozesse und/oder der Anzahl der Siebvorgänge das Baumaterial (3, 14) in verschiedenen Verarbeitungsschritten wiederverwendet wird.

2. Verfahren nach Anspruch 1, wobei die Anzahl der Siebvorgänge, die an mindestens einem Teil des in dem mindestens einen Baumaterialbehälter (4, 8) aufgenommenen Baumaterials (3, 14) durchgeführt werden, ermittelt wird.

3. Verfahren nach Anspruch 1 oder 2, wobei ein Verhältnis von Baumaterial (3, 14) mit unterschiedlicher Anzahl von Bauprozessen und/oder Siebprozessen, aus denen das in dem Baumaterialbehälter (4, 8) aufgenommene Baumaterial (3, 14) besteht, bestimmt wird.

4. Verfahren nach einem der vorhergehenden Ansprüche, wobei mindestens ein Parameter ermittelt wird, der mit der Anzahl der Bauvorgänge und/oder der Anzahl der Siebvorgänge des in dem mindestens einen Baumaterialbehälter (4, 8) aufgenommenen Baumaterials (3, 14) zusammenhängt, insbesondere die Farbe und/oder die Korngröße und/oder die Korngrößenverteilung und/oder die Maschenweite mindestens eines im Siebvorgang verwendeten Siebes.

5. Verfahren nach einem der vorhergehenden Ansprüche, wobei die Anzahl der Bauvorgänge und/oder die Anzahl der Siebvorgänge und/oder der mindestens eine Parameter über einen mit dem Baumaterialbehälter (4, 8) verbundenen Informationsspeicher (10) gespeichert wird, wobei die in dem Informationsspeicher (10) gespeicherte oder mit diesem verbundene Information direkt, insbesondere über einen Datenspeicher, vorzugsweise eine Festplatte, oder indirekt, insbesondere über einen an dem Baumaterialbehälter (4, 8) angebrachten Barcode und/oder einen QR-Code und/oder RFID und/oder NFC, aus dem Informationsspeicher (10) ausgelesen werden kann.

6. Verfahren nach einem der vorhergehenden Ansprüche, wobei die Anzahl der Bauprozesse und/oder die Anzahl der Siebprozesse nach Abschluss eines entsprechenden Prozesses aktualisiert wird.

7. Bestimmungseinheit (16) für eine Vorrichtung (1) zur additiven Herstellung von dreidimensionalen Objekten (2) mittels aufeinanderfolgender schichtweiser selektiver Bestrahlung und Verfestigung von Schichten eines Baumaterials (3, 14), das mittels einer Energiequelle verfestigt werden kann, wobei die Vorrichtung mindestens einen Baumaterialbehälter (4, 8) aufweist, der geeignet ist, Baumaterial (3, 14) aufnimmt, wobei die Bestimmungseinheit (16) so ausgebildet ist, dass sie die Anzahl der Bauprozesse, bei denen mindestens ein Teil des in dem mindestens einen Baumaterialbehälter (4, 8) aufgenommenen Baumaterials (3, 14) verwendet wurde, und/oder die Anzahl der Siebvorgänge, die an mindestens einem Teil des in dem mindestens einen Baumaterialbehälter (4, 8) aufgenommenen Baumaterials (3, 14) durchgeführt wurden, durch Zählen der Anzahl der Bauprozesse bestimmt, 8) aufgenommenen Baumaterials (3, 14) durch Zählen der Anzahl der Bauprozesse und/oder Ermitteln mindestens eines auf die Anzahl der Bauprozesse bezogenen Parameters, wobei die Bestimmungseinheit (16) dazu eingerichtet ist, bei einer definierten Anzahl von Bauprozessen und/oder Siebvorgängen mindestens eine definierte Menge an Baumaterial (3, 14), insbesondere an frischem Baumaterial (3, 14), zu ermitteln, die dem im Baumaterialbehälter (4, 8) aufgenommenen Baumaterial (3, 14) in Abhängigkeit von der Anzahl der durchgeführten Bauprozesse und/oder der Anzahl der Siebvorgänge zuzuführen ist, und in Abhängigkeit von der Anzahl der Bauprozesse und/oder der Anzahl der Siebvorgänge verschiedene Bearbeitungsschritte zu bestimmen, in denen der Baumaterial (3, 14) wiederverwendet wird.

8. Bestimmungseinheit nach Anspruch 7, wobei die Bestimmungseinheit (16) dazu eingerichtet ist, das Verfahren nach einem der Ansprüche 1 bis 6 durchzuführen.

9. Vorrichtung (1) zur additiven Herstellung von dreidimensionalen Objekten (2) mittels sukzessiver schichtweiser selektiver Bestrahlung und Verfestigung von Schichten eines mittels einer Energiequelle verfestigbaren Baumaterials (3, 14), welche Vorrichtung mindestens einen zur Aufnahme von Baumaterial (3, 14) geeigneten Baubehälter (4, 8) und mindestens eine Bestimmungseinheit (16) nach Anspruch 7 oder 8 umfasst.

10. Vorrichtung nach Anspruch 9, wobei mindestens ein Baumaterialbehälter (4, 8) als Dosiermodul (5) und/oder als Baumodul (6) und/oder als Überlaufmodul (7) und/oder als Handhabungsstation (11) und/oder als Siebeinheit (12) und/oder als Mischeinheit (15) ausgebildet oder angeordnet ist.

## Revendications

1. Procédé pour faire fonctionner au moins un appareil (1) pour la fabrication additive d'objets tridimensionnels (2) au moyen d'une irradiation sélective par couches successives et d'une consolidation des couches d'un matériau de construction (3, 14) qui peut être consolidé au moyen d'une source d'énergie, lequel appareil (1) comprend au moins un conteneur de matériau de construction (4, 8) adapté pour recevoir le matériau de construction (3, 14), dans lequel le nombre de processus de construction dans lesquels au moins une partie du matériau de construction (3, 14) reçu dans le au moins un conteneur de matériau de construction (4, 8) a été utilisée est déterminé en comptant le nombre de processus de construction et/ou en déterminant au moins un paramètre relatif au nombre de processus de construction, dans lequel, en fonction du nombre de processus de construction et/ou du nombre de processus de tamisage effectués, au moins une quantité définie de matériau de construction (3, 14) avec un nombre défini de processus de construction et/ou de processus de tamisage, en particulier du matériau de construction frais (3, 14), est ajoutée au matériau de construction (3, 14) reçu dans le conteneur de matériau de construction (4, 8) et, en fonction du nombre de processus de construction et/ou du nombre de processus de tamisage, le matériau de construction (3, 14) est réutilisé dans différentes étapes de traitement.

2. Procédé selon la revendication 1, dans lequel le nombre de processus de tamisage effectués sur au moins une partie du matériau de construction (3, 14) reçu dans le au moins un conteneur de matériau de construction (4, 8) est déterminé.

3. Procédé selon la revendication 1 ou 2, dans lequel on détermine un rapport de matériau de construction (3, 14) avec différents nombres de processus de construction et/ou de processus de tamisage dont est composé le matériau de construction (3, 14) reçu dans le conteneur de matériau de construction (4, 8).

4. Procédé selon l'une des revendications précédentes, dans lequel on détermine au moins un paramètre relatif au nombre de processus de construction et/ou au nombre de processus de tamisage du matériau de construction (3, 14) reçu dans le au moins un conteneur de matériau de construction (4, 8), notamment la couleur et/ou la granulométrie et/ou la répartition granulométrique et/ou la taille de maille d'au moins une maille utilisée dans le processus de tamisage.

5. Procédé selon l'une des revendications précédentes, dans lequel le nombre de processus de construction et/ou le nombre de processus de tamisage et/ou l'au moins un paramètre est mémorisé par l'intermédiaire d'une mémoire d'informations (10) reliée au conteneur de matériau de construction (4, 8), les informations mémorisées dans ou reliées à la mémoire d'informations (10) pouvant être lues directement, notamment par l'intermédiaire d'une mémoire de données, de préférence un disque dur, ou indirectement, notamment par l'intermédiaire d'un code à barres et/ou d'un code QR et/ou d'une RFID et/ou d'une NFC fixée sur le conteneur de matériau de construction (4, 8), dans la mémoire d'informations (10).

6. Procédé selon l'une des revendications précédentes, dans lequel le nombre de processus de construction et/ou le nombre de processus de tamisage est mis à jour après l'achèvement d'un processus correspondant.

7. Unité de détermination (16) pour un appareil (1) de fabrication additive d'objets tridimensionnels (2) au moyen d'une irradiation sélective par couches successives et d'une consolidation des couches d'un matériau de construction (3, 14) qui peut être consolidé au moyen d'une source d'énergie, lequel appareil comprend au moins un conteneur de matériau de construction (4, 8) adapté pour recevoir le matériau de construction (3, 14), dans lequel l'unité de détermination (16) est adaptée pour déterminer le nombre de processus de construction dans lesquels au moins une partie du matériau de construction (3, 14) reçu dans le au moins un conteneur de matériau de construction (4, 8) a été utilisé et/ou le nombre de processus de tamisage effectués sur au moins une partie du matériau de construction (3, 14) reçu dans le au moins un conteneur de matériau de construction (4, 8) en comptant le nombre de processus de construction et/ou en déterminant au moins un paramètre relatif au nombre de processus de construction, dans lequel l'unité de détermination (16) est adaptée pour déterminer au moins une quantité définie de matériau de construction (3, 14) avec un nombre défini de processus de construction et/ou de processus de tamisage, en particulier du matériau de construction frais (3, 14), qui doit être ajoutée au matériau de construction (3, 14) reçu dans le conteneur de matériau de construction (4, 8) en fonction du nombre de processus de construction et/ou du nombre de processus de tamisage effectués, et pour déterminer différentes étapes de traitement dans lesquelles le matériau de construction (3, 14) est réutilisé en fonction du nombre de processus de construction et/ou du nombre de processus de tamisage.

8. Unité de détermination selon la revendication 7, dans laquelle l'unité de détermination (16) est adaptée pour exécuter le procédé selon l'une des revendications 1 à 6.

9. Appareil (1) pour la fabrication additive d'objets tridimensionnels (2) au moyen d'une irradiation sélective par couches successives et d'une consolidation des couches d'un matériau de construction (3, 14) qui peut être consolidé au moyen d'une source d'énergie, lequel appareil comprend au moins un récipient de matériau de construction (4, 8) adapté pour recevoir le matériau de construction (3, 14) et, au moins une unité de détermination (16) selon la revendication 7 ou 8.

10. Appareil selon la revendication 9, dans lequel au moins un conteneur de matériau de construction (4, 8) est construit ou disposé dans un module de dosage (5) et/ou un module de construction (6) et/ou un module de débordement (7) et/ou une station de manipulation (11) et/ou une unité de tamisage (12) et/ou une unité de mélange (15).
